# EUROPEAN PATENT APPLICATION

(11) **EP 3 247 055 A1**
(43) Date of publication of application: **22.11.2017**
(21) Application number: 15871893.2
(22) Date of filing: 16.12.2015
(51) Int. Cl.: H04B 10/032

(54) **METHOD AND APPARATUS FOR HOT STANDBY OF CONTROLLERS IN DISTRIBUTED PROTECTION**

(30) Priority: 25.12.2014 CN 201410820899
(71) Applicant: ZTE Corporation, Shenzhen, Guangdong 518057 (CN)
(72) Inventor: LI, Bikai, Shenzhen Guangdong 518057 (CN); LU, Gang, Shenzhen Guangdong 518057 (CN); LI, Guofang, Shenzhen Guangdong 518057 (CN)
(74) Representative: Regimbeau
(86) International application number: PCT/CN2015/097578
(87) International publication number: WO 2016/101825

(57) **Abstract**

A method and an apparatus for hot standby of controllers in distributed protection are provided. The method includes: through an actuator, receiving (301) a message transmitted from each of the controllers; determining the messages caused by a same protocol triggering according to a serial number of each message, maintaining (302) a master-standby relationship of each of the controllers through the messages caused by the same protocol triggering; and executing (303) a message transmitted from a master controller; and in a protocol steady state, performing (304) a master-standby switching if it is determined that a switching condition is met.

## Description

### TECHNICAL FIELD

The present application relates to, but is not limited to, a hot standby technology for an optical transmission network.

### BACKGROUND

An automatic protect switching (APS) technology has been widely applied in an optical network. Generally, in a device, a protection system will be logically divided into four parts: a controller, a detector, an actuator and a protocol transmitter.

The controller is a core part of the APS, and is arranged to receive inputs from the detector and the protocol transmitter, perform a protection protocol calculation on the inputs, issue a switching command to the actuator, and transmit a signaling to an opposite end through the protocol transmitter during bidirectional switching.

The detector is arranged to perform a fault detection on a work or protection path, and send a result of the detection to the controller as an input.

The actuator is arranged to receive the switching command output by the controller so as to control the switching of services.

In a bidirectional switching configuration, a controller of a transmitting end informs the protocol transmitter to transmit a PCC (Policy Control and Charging) signaling in a standard, and a protocol transmitter of a receiving end informs the controller after the signaling of the opposite end being received.

In a centralized protection control system, the controller of the APS is generally provided in a separate CPU in a network element, such as a master control board, while the detector, the actuator and the protocol transmitter are generally provided on a service single board. All protection groups of the network element are controlled by a unified controller. The best advantage of such mode lies in that a protection function can be achieved quickly and a protocol algorithm can be adjusted quickly. However, the disadvantage of such a mode is also very apparent. That is, due to a limited processing load of the centralized CPU, the switching time may be affected when there are a lot of protection services in the whole network.

In a distributed protection control system, a load of the CPU is distributed to multiple CPUs, so that the disadvantage of the centralized protection control system may be overcome. In such a scene, when there are a lot of services required to be protected, the switching time may not be affected, and a problem of a service protection function fault of the whole network element due to a fault of the controller may be avoided as well. Therefore, in such a scene, the controller sinks to the service single board.

Either in the centralized protection control system or the distributed protection control system, the controller is a core component of automatic protect switching. If hardware or software of the controller broke down, the switching cannot be performed and the services will be interrupted correspondingly. Therefore, it is necessary to provide a redundant standby protection for the controller, so as to improve the viability of an optical transmission network.

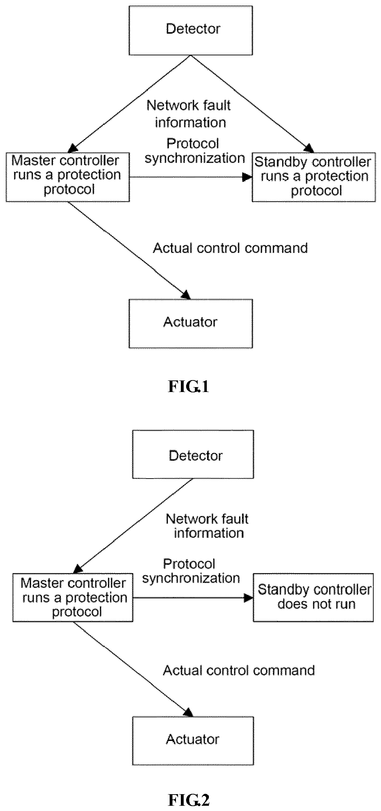

In the centralized protection control system, the controller is generally provided in the master control board which per se employs a 1+1/1:1 hot standby way. That is, two controllers, namely, a master protocol controller and a standby protocol controller, are adopted in a network element with an automatic protect switching function. In order to achieve the automatic protect switching function of the hot standby way, as shown in FIG. 1 and FIG. 2, the traditional 1:1 hot standby method adopts the following two commonly used manners:
(1) Both of the master protocol controller and the standby protocol controller can run normally and can receive the input from the detector simultaneously. After running a protocol, only the master protocol controller issues the switching command to the actuator, and the standby protocol controller does not issue the switching command. The master protocol controller and the standby protocol controller perform real-time synchronization protocol and timing synchronization protocol respectively. If the protocols are inconsistent, the master protocol controller generally prevails; and when the master control board, on which the main protocol controller is located, is restarted, pulled off, or damaged and the standby protocol controller can detect such a situation, the standby protocol controller is switched to be a new master protocol controller, and the previous master protocol controller is switched to be a standby protocol controller, and the master control board needs to maintain a master-standby status.
(2) Only the master protocol controller works normally and the standby protocol controller does not run. Only the master protocol controller receives the input from the detector, or the master protocol controller and the standby protocol controller both receive the input, but the standby protocol controller filters the input out. The master protocol controller issues a switching command to the actuator after the protocol is calculated, the master protocol controller performs the real-time synchronization protocol and the timing synchronization protocol on the standby protocol controller. A process of master-standby switching is the same as that of the manner 1.

In the distributed protection control system of the related art, if there is a multi-node interconnection scene in networking and interconnected nodes are served as controllers, then there will be multiple controllers to run. In this case, a hot standby manner of master-standby is also needed to protect the controllers, and if the hot standby manner in the traditional centralized protection is employed, there will be the following disadvantages:
(1) In the distributed protection, it is necessary to maintain relationships of multiple master controllers and standby controllers and there will be multiple synchronization protocol processes, which is a high requirement for communication resources, while in the centralized protection, it is merely necessary to maintain a master-standby status between a master control board and a standby master control board and all synchronization processes.
(2) The master-standby switching cannot be performed in the distributed protection as timely as that did in the master control board. There is generally a dedicated channel between the master and the standby, so as to maintain the master-standby status, while the maintaining of the master-standby status between service single boards where the controllers in the distributed protection are located only relies on temporary inter-board communication.
(3) As the networking becomes more and more complicated, there may be a scenario where multiple controllers in the distributed protection are served as hot standby, such as a multi-node interconnection scenario. If the number of the interconnected nodes is greater than 2 and the interconnected nodes are served as the controllers, that is, the hot backup is changed into 1:N hot backup, which can not be supported by the 1+1/1:1 hot standby of the traditional centralized protection.
(4) The switching time of the distributed protection can not be optimized. If a traditional master-standby controller manner is adopted, the standby controllers may be more efficient for different protection group, the switching command will be transmitted faster and the switching time of the protection will be shorter.

Accordingly, in the distributed protection control system, it is necessary to find other methods to solve the problem of hot standby of the controllers.

### SUMMARY

The following is an overview of the subject matter that is described herein in detail. This overview is not intended to limit a protective scope of claims.

The present invention provides a method and an apparatus for hot standby of controllers in distributed protection.

A method for hot standby of controllers in distributed protection includes the following steps:
through an actuator, receiving a message transmitted from each of the controllers, determining messages caused by a same protocol triggering according to a serial number of each message, maintaining a master-standby relationship of each of the controllers through the messages caused by the same protocol triggering, and executing the message transmitted from a master controller, and
in a protocol steady state, through the actuator, performing a master-standby switching if it is determined that a switching condition is met.

In the above solution, the message transmitted from each of the controllers includes protocol control information, protocol status information and the serial number.

In the above solution, the step of maintaining a master-standby relationship of each of the controllers through the messages caused by the same protocol triggering incudes: having the controller, from which the message caused by the same protocol triggering is first received upon a first protocol triggering, as the master controller, and having other controllers as standby controllers; upon each protocol triggering, recording the controller from which the message is first received, and adding a message issue number in master-standby relationship information by 1.

In the above solution, the method further includes: setting a first expiration time T1; and when the message transmitted from a standby controller is actually first received by the actuator, executing, through the actuator, a protect switching operation in accordance with the message transmitted from the standby controller if no message transmitted from the master controller is received within the first expiration time T1.

In the above solution, the steady state of the protocol is as follows: a second expiration time T2 is set, after the messages transmitted from the controllers are received by the actuator, if no message transmitted from any controller is received within the second expiration time T2, it is determined that a protection protocol of a protection group is in a steady state; and
the switching condition is as follows: in the protocol steady state, in current master-standby relationship information, a message issue number of a standby controller is greater than or equal to a first threshold N, and the message issue number of the master controller is less than N.

In the above solution, the step of performing a master-standby switching includes: through the actuator, comparing the message issue numbers of the standby controllers in the master-standby relationship information, switching the standby controller with largest message issue number as the master controller and switching original master controller as the standby controller, and resetting the message issue number of each of the controllers in the master-standby relationship information as 0.

In the above solution, the method further includes: through the actuator, verifying the protocol control information and the protocol status information of each of the controllers, and performing a protocol synchronization or protocol reset if there exists any inconsistency among the protocol control information and the protocol status information of each of the controllers.

In the above solution, the step of through the actuator, verifying the protocol control information and the protocol status information of each of the controllers, and performing a protocol synchronization or protocol reset if there exists any inconsistency among the protocol control information and the protocol status information of each of the controllers includes: in the protocol steady state, through the actuator, classifying the controllers, the messages transmitted by which have same protocol control information and same protocol status information, into one type according to the protocol control information and the protocol status information in the messages transmitted from each of the controllers upon each protocol triggering; in the case that a total number of controllers of a certain type is maximum, through the actuator, transmitting a multicasting message including a protocol synchronization command and the protocol control information and protocol status information of such type of controllers to each controller, and each controller verifies own protocol control information and protocol status information after receiving the multicasting message; if there exists any inconsistency between the multicasting message and the controller's own protocol control information and protocol status information, performing a synchronization of the protection protocol through the actuator, and the synchronization is omitted if the multicasting message is consistent with the controller's own protocol control information and protocol status information; in the case that there is no type of controllers a total number of which is maximum, transmitting a multicasting message including merely a protocol reset command to each controller, so that each controller re-queries a network fault of the detector to execute the protocol after resetting the protection protocol.

An apparatus for hot standby of controllers in distributed protection includes:
a receiving module, arranged to receive a message transmitted from each of the controllers;
a determination module, arranged to determine messages caused by a same protocol triggering according to a serial number of each message;
a maintenance module, arranged to maintain a master-standby relationship of each of the controllers through the messages caused by the same protocol triggering;
a message execution module, arranged to execute the message transmitted from a master controller; and
a master-standby switching module, arranged to, in a protocol steady state, perform a master-standby switching if it is determined that a switching condition is met.

In the above solution, the message transmitted from each of the controllers includes protocol control information, protocol status information and the serial number.

In the above solution, the maintenance module is arranged to: have the controller, from which the message caused by a same protocol triggering is first received upon a first protocol triggering, as the master controller, and have other controllers as standby controllers; upon each protocol triggering, record the controller from which the message is first received, and add a message issue number in master-standby relationship information by 1.

In the above solution, the message execution module is further arranged to, when the actuator actually first receives the message transmitted from the standby controller, execute a protect switching operation in accordance with the message transmitted from the standby controller if no message transmitted from the master controller is received within an first expiration time T1.

In the above solution, the switching condition is as follows: in the protocol steady state, in current master-standby relationship information, a message issue number of a standby controller is greater than or equal to a first threshold N, and the message issue number of the master controller is less than N.

The master-standby switching module is arranged to compare the message issue numbers of the standby controllers in the master-standby relationship information, switch the standby controller with largest message issue number as the master controller and switch original master controller as the standby controller, and reset the message issue number of each controller in the master-standby relationship information as 0.

In the above solution, the apparatus further includes a verification module, arranged to verify the protocol control information and the protocol status information of each of the controllers, and perform protocol synchronization or protocol reset if there exists any inconsistency among the protocol control information and the protocol status information of each of the controllers.

In the above solution, the verification module is arranged to: in the protocol steady state, classify the controllers, the messages transmitted by which have same protocol control information and same protocol status information, into one type according to the protocol control information and the protocol status information in the messages transmitted from each controller upon each protocol triggering; in the case that a total number of controllers of a certain type is maximum, transmit a multicasting message including a protocol synchronization command and the protocol control information and protocol status information of such type of controllers to each controller, so that each controller verifies own protocol control information and protocol status information after receiving the multicasting message; if there exists any inconsistency between the multicasting message and the controller's own protocol control information and protocol status information, perform a synchronization of the protection protocol through the actuator, and the synchronization is omitted if the multicasting message is consistent with the controller's own protocol control information and protocol status information; in the case that there is no type of controllers a total number of which is maximum, transmit a multicasting message including merely a protocol reset command to each controller, so that each controller re-queries a network fault of the detector to execute the protocol after resetting the protection protocol.

An actuator includes the apparatus for hot standby of controllers in the distributed protection.

A system for hot standby of controllers in the distributed protection includes an actuator, a detector and a plurality of controllers, where
the detector is arranged to, after performing a fault detection, inform each of the controllers of a network fault through transmitting a multicasting message;
each of the controllers is arranged to individually execute a protection protocol after receiving the multicasting message, and respectively transmit a message to the actuator after performing the protection protocol, wherein the message transmitted to the actuator comprises protocol control information, protocol status information and a serial number; and
the actuator is arranged to receive the messages transmitted from each of the controllers; determine messages caused by a same protocol triggering according to the serial number of each message; maintain a master-standby relationship of each of the controllers through the messages caused by the same protocol triggering; and execute the message transmitted from a master controller; and in a protocol steady state, perform a master-standby switching if it is determined that a switching condition is met.

Embodiments of the present invention provide a method and an apparatus for hot standby of controllers in distributed protection. The actuator receives a message transmitted from each of the controllers, determines the message caused by the same protocol triggering according to a serial number of each message, maintains a master-standby relationship of each of the controllers through the messages caused by the same protocol triggering, and executes a message transmitted from a master controller; and in a steady protocol state, performs a master-standby switching if it is determined that a switching condition is met. As such, each controller normally runs the protocol, the controller per se does not belong to a master controller or a standby controller fixedly, and does not maintain a master-standby status per se. The master-standby relationship of controllers is dynamically maintained by an actuator of each protection group, so that a 1:N (N>=1) hot standby scenario of the controllers in the distributed protection is supported. Moreover, in the protocol steady state, the actuator can perform the synchronization of the protection protocols without performing a protocol synchronization among the controllers.

Upon reading and understanding of accompanying drawings and detailed description, other aspects may be apparent.

### BRIEF DESCRIPTION OF DRAWINGS

FIG. 1 is a schematic architecture diagram showing a system in which a master protocol controller and a standby protocol controller both run normally for realizing 1:1 hot standby;
FIG. 2 is a schematic architecture diagram showing a system in which a master protocol controller runs normally and a standby protocol controller does not run for realizing 1:1 hot standby;
FIG. 3 is a schematic flow diagram showing a method for hot standby of controllers in distributed protection according to an embodiment of the present invention;
FIG. 4 is a schematic structural diagram showing an apparatus for hot standby of controllers in distributed protection according to an embodiment of the present invention; and
FIG. 5 is a schematic structural diagram showing a system for hot standby of controllers in distributed protection according to an embodiment of the present invention.

### DETAILED DESCRIPTION

In an embodiment of the present invention, an actuator is arranged to receive a message transmitted from each controller, determine the message caused by the same protocol triggering according to a serial number of each message, and maintain a master-standby relationship of each controller by the message caused by the same protocol triggering, and execute the message transmitted from the master controller. In a protocol steady state, the actuator performs a master-standby switching when it is determined that a switching condition is met.

Embodiments of the present invention will be described below with reference to the accompanying drawings.

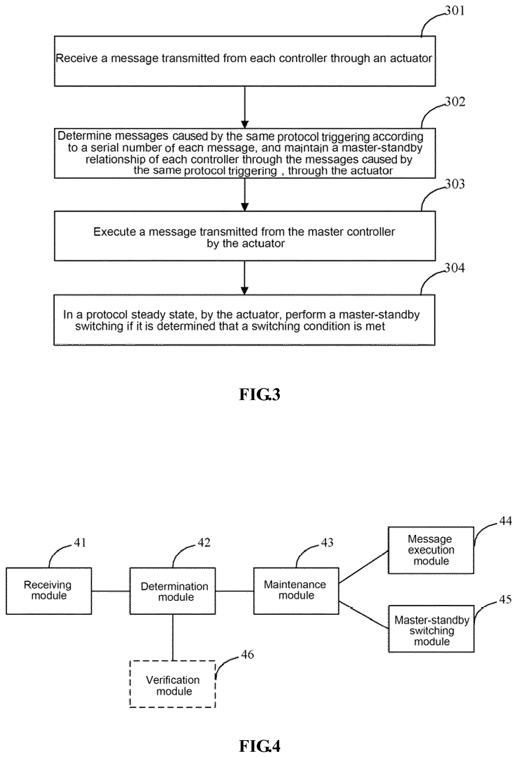

An embodiment of the present invention implements a method for hot standby of controllers in distributed protection. As shown in FIG. 3, the method includes the following steps:
In step 301, an actuator receives a message transmitted from each controller.

Prior to this step, the detector informs each controller of a network fault by transmitting a multicasting message after performing a fault detection. After receiving the multicasting message, each controller separately performs a protection protocol individually, and respectively transmits a message to the actuator after performing the protection protocol.

Herein, multiple controllers in each protection group need to join a multicast group. The multicasting message transmitted from the detector includes network fault information and a serial number uniquely identifying a protocol to be triggered by the fault information at this time. The generation of the serial number can be based on a timestamp or a sequence with an increment of 1.

The message transmitted to the actuator by the controller includes protocol control information, protocol status information and the serial number, where the protocol control information is a service single board actual switching crossover or on-off command transmitted to the actuator by the controller, the protocol status information is a collection of key variables of some protocols, and the serial number directly uses a serial number in the multicasting message transmitted from the detector.

In step 302, the actuator determines the message caused by the same protocol triggering according to the serial number of each message, and maintains a master-standby relationship of each controller through the message caused by the same protocol triggering.

The actuator determines messages caused by the same protocol triggering according to the serial number of each message, and has the controller, from which the message caused by the same protocol triggering is first received upon a first protocol triggering, as the master controller, and has other controllers as the standby controller. Upon each protocol triggering, the controller from which the message is first received is recorded and a message issue number of the controller in master-standby relationship information increases by 1.

In step 303, the actuator executes the message transmitted from the master controller.

The actuator actually executes the message transmitted from the master controller every time without executing the message transmitted from other standby controllers, and presets a first expiration time T1. When the message transmitted from the standby controllers is actually first received by the actuator , the actuator executes a protect switching operation in accordance with the message transmitted from the standby controller if no message transmitted from the master controller is received within the first expiration time T1.

In step 304, in the protocol steady state, the actuator performs a master-standby switching if it is determined that a switching condition is met.

In this step, the steady state of the protocol is as follows: a second expiration time T2 is preset, after the messages transmitted from the controllers are received by the actuator, if the actuator fails to receive a message transmitted from any controller within the second expiration time T2, a protection protocol of a protection group is determined to be in a steady state.

The switching condition is as follows: in the protocol steady state, in the current master-standby relationship information, the message issue number of a standby controller is greater than or equal to a first threshold N, and the message issue number of the master controller is less than N.

The master-standby switching includes: the actuator compares the message issue numbers of the standby controllers in the master-standby relationship information, and swathes the standby controller with the largest message issue number to be the master controller and switches the original master controller to be the standby controller; and the message issue number of each controller in the master-standby relationship information is reset as 0.

Herein, in the protocol steady state, when the message issue number of the master controller first reaches N, the master-standby switching is not performed and the message issue number of each controller in the master-standby relationship information is reset as 0.

The above method further includes: the actuator verifies the protocol control information and the protocol status information of each controller, and performs protocol synchronization or protocol reset if there exists any inconsistency among the protocol control information and the protocol status information of each controller.

In the protocol steady state, the actuator classifies the controllers, the messages transmitted by which have same protocol control information and same protocol status information, into one type according to the protocol control information and the protocol status information in the messages transmitted from each controller upon each protocol triggering. In the case that the number of the controllers belonging to one type is largest, a multicasting message including a protocol synchronization command, protocol control information and protocol status information of such type of controllers is transmitted to each controller, and each controller verifies own protocol control information and protocol status information after receiving the multicasting message. If there exists any inconsistency between the multicasting message and protocol control information and protocol status information of the controller, the actuator performs a protection protocol synchronization, and if the multicasting message is consistent with the protocol control information and protocol status information of the controller, the protection protocol synchronization is omitted. In the case that there exists no type of controllers with largest number, a multicasting message including only a protocol reset command is transmitted to each controller, and each controller re-queries a network fault of the detector to execute the protocol after performing the protection protocol reset.

To implement the method as described above, an embodiment of the present invention further provides an apparatus for hot standby of controllers in distributed protection, which is disposed on an actuator. As shown in FIG. 4, the apparatus includes a receiving module 41, a determination module 42, a maintenance module 43, a message execution module 44 and a master-standby switching module 45.

The receiving module 41 may be implemented by an interface of an actuator, and is arranged to receive a message transmitted from each controller.

The determination module 42 may be implemented by a processor of the actuator, and is arranged to determine messages caused by the same protocol triggering according to a serial number of each message.

The maintenance module 43 may be implemented by a memory of the actuator, and is arranged to maintain a master-standby relationship of each controller through the messages caused by the same protocol triggering.

The message execution module 44 may be implemented by the processor of the actuator, and is arranged to execute a message transmitted from a master controller.

The master-standby switching module 45 may be implemented by the processor of the actuator, and is arranged to, in a protocol steady state, perform a master-standby switching if it is determined that a switching condition is met.

The message transmitted from each controller includes protocol control information, protocol status information and the serial number, where the protocol control information is a service single board actual switching crossover or on-off command transmitted to the actuator by the controller, the protocol status information is a collection of key variables of some protocols, and the serial number directly uses a serial number in the multicasting message transmitted from the detector.

The maintenance module 43 is arranged to have the controller, from which the message caused by the same protocol triggering is first received upon a first protocol triggering, as the master controller and have other controllers as the standby controllers, and record the controller the message transmitted from which is first received and add a message issue number of the controller in the master-standby relationship information by 1 upon each protocol triggering.

The message execution module 44 is arranged to actually execute the message transmitted from the master controller every time without executing the message transmitted from other standby controllers, and preset a first expiration time T1. When the actuator actually first receives the message transmitted from the standby controller, the message execution module 44 executes a protect switching operation in accordance with the message transmitted from the standby controller if no message transmitted from the master controller is received within the first expiration time T1.

The protocol steady state is as follows: a second expiration time T2 is preset, after the messages transmitted from the controllers are received by the actuator, if the actuator fails to receive a message transmitted from any controller within the second expiration time T2, a protection protocol of a protection group is determined to be in the steady state.

The switching condition is as follows: in the protocol steady state, in the current master-standby relationship information, the message issue number of a standby controller reaches a first threshold N, and the message issue number of the master controller is less than N.

The master-standby switching module 45 is arranged to compare the message issue number of the standby controllers in the master-standby relationship information when it is determined that the switching condition is met, where the standby controller with the largest message issue number becomes the master controller and the original master controller becomes the standby controller, and the message issue number of each controller in the master-standby relationship information is reset as 0.

The apparatus further includes a verification module 46, which is arranged to verify the protocol control information and the protocol status information of each controller, and perform the protocol synchronization or protocol reset if there exists any inconsistency among the protocol control information and the protocol status information of each controller.

In the protocol steady state, the verification module 46 is further arranged to classify the controllers, messages transmitted by which have same protocol control information and protocol status information, into one type according to the protocol control information and the protocol status information in the messages transmitted from each controller upon each protocol triggering. In the case that the number of the controllers belonging to one type is largest, a multicasting message including a protocol synchronization command, protocol control information and protocol status information of such type of controllers is transmitted to each controller, so that each controller verifies own protocol control information and protocol status information after receiving the multicasting message. If there exists any inconsistency between the multicasting message and the protocol control information and protocol status information of the controller, the protection protocol synchronization is performed, and if the multicasting message is consistent with the protocol control information and protocol status information of the controller, the protection protocol synchronization is omitted. In the case that there exists no type of controllers with largest number, a multicasting message including only a protocol reset command is transmitted to each controller, so that each controller re-queries a network fault of the detector to execute the protocol after performing the protection protocol reset.

Based on the apparatus as described above, an embodiment of the present invention further provides an actuator, which includes the apparatus for hot standby of controllers in the distributed protection as shown in FIG. 4.

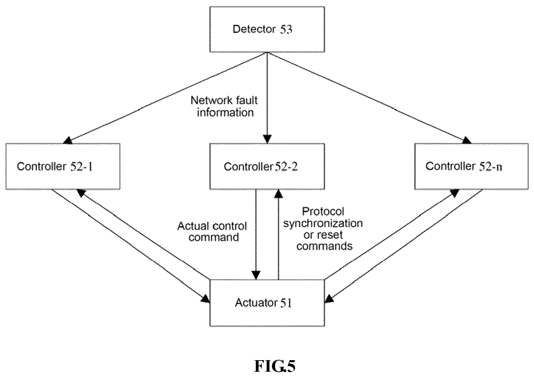

Based on the actuator as described above, an embodiment of the present invention further provides a system for hot standby of controllers in distributed protection. As shown in FIG. 5, the system includes an actuator 51, a detector 53 and a plurality of controllers 52 (including a controller 52-1, a controller 52-2, ......, a controller 52-n).

The detector 53 is arranged to, after performing a fault detection, inform each controller 52 of a network fault by transmitting a multicasting message.

The controllers 52 are arranged to individually execute a protection protocol after receiving the multicasting message, and respectively transmit a message including protocol control information, protocol status information and a serial number to the actuator 51 after performing the protection protocol.

The actuator 51 is arranged to receive the messages transmitted from each controller 52, determine messages caused by the same protocol triggering according to the serial number of each message, maintain a master-standby relationship of each controller 52 through the messages caused by the same protocol triggering, and execute the message transmitted from a master controller; and in the protocol steady state, perform the master-standby switching if it is determined that a switching condition is met.

The actuator 51 includes the apparatus for hot standby of controllers in the distributed protection as shown in FIG. 4.

### Embodiment I

The present embodiment relates to a 1:2 hot standby switching among a master controller and standby controllers.

A webmaster newly establishes a protection group of a distributed system, issues a configuration of the protection group to the controllers, actuator and detector. Herein, there are three controllers in total, which are in hot standby of each other. After the configuration is received by the actuator, the actuator maintains the master-standby relationship information of the three controllers in a memory. The master-standby relationship information is indicated in a form of a table in the present embodiment.

After the detector first reports a network fault to each controller to trigger the execution of the protocol, the controllers issue switching control command messages to the actuator. If the actuator receives 3 same control command messages and finds that the control command message transmitted from the controller 1 is first received, the controller 1 is temporarily determined as a master controller. A master-standby relationship field of the controller 1 is updated to be M, while a master-standby relationship fields of the other controllers are updated to be S. Moreover, a message issue number of the controller 1 is increased by 1, as shown in Table 1.

**Table 1**

| Number of Controller | Master-standby Relationship | Message issue number of the controller |
|---|---|---|
| 1 | M | 1 |
| 2 | S | 0 |
| 3 | S | 0 |

Through reporting the network fault information by the detector repeatedly, the actuator also receives a plurality of control command messages. As shown in Table 2, the recorded message issue number indicating how many times the message transmitted from the controller 2 is first received reaches 10. In the present embodiment, it is assumed that a condition of a master-standby switching opportunity is met when N equals to 10. A possible reason that the message issue number indicating how many times the message transmitted from the controller 2 is first received is maximal lies in: a communication channel between the actuator and the controller 2 is the most efficient or the protection group has the highest execution efficiency in the controller 2. Although the controller 1 is selected as the master controller in an initial establishment stage of the protection group, after a certain period of time, the actuator preferably selects the controller 2 as the master controller, which increases the switching execution efficiency.

**Table 2**

| Number of Controller | Master-standby Relationship | Message issue number of the controller |
|---|---|---|
| 1 | M | 3 |
| 2 | S | 10 |
| 3 | S | 1 |

As shown in Table 3, the actuator performs the master-standby switching of the controllers. The master-standby relationship field of the controller 2 in the table is updated to be M, the master-standby relationship field of the controller 1 is updated to be S, and the message issue number of each controller is reset as 0, and re-started to be counted.

**Table 3**

| Number of Controller | Master-standby Relationship | Message issue number of the controller |
|---|---|---|
| 1 | S | 0 |
| 2 | M | 0 |
| 3 | S | 0 |

### Embodiment II

The present embodiment is an execution process that protection protocols of controllers for 1:2 hot standby are inconsistent.

In the present embodiment, a scenario where protocol control information and protocol status information are inconsistent in 1:2 hot standby of controllers is taken as an example. The detector reports a network fault and triggers the controllers 1 to 3 for working SF to execute protocols respectively, where the controller 1 is a master controller, and a protocol synchronization operation is performed after the protocol is in a steady state.

WSF, RR and the like are abbreviations of the protocol status information.
(1) In a message issued by the controller 1, the protocol control information is "Switch" and the protocol status information is "WSF".
(2) In a message issued by the controller 2, the protocol control information is "Switch" and the protocol status information is "WSF".
(3) In a message issued by the controller 3, the protocol control information is "Idle" and the protocol status information is "RR".

There are two types of protocol control information and protocol status information, namely, Switch/WSF and Idle/RR. The controllers 1, 2 belong to the Switch/WSF type, and the controller 3 belongs to the Idle/RR type. In this case, the number of the controllers belonging to the Switch/WSF type is larger, thus this protocol is executed based on Switch/WSF, and the actuator transmits a multicasting message including Switch/WSF and protocol synchronization commands to each controller.

After the multicasting message is received by the controllers 1, 2, the multicasting message is compared with the controllers 1, 2's own protocol control and status information. If it is found that they are consistent with each other, no operation is performed. After the multicasting message is received by the controller 3, the multicasting message is compared with the controller 3's own protocol control and status information Idle/RR, and it is found that they are inconsistent with each other. Next, the controller 3 performs the protocol synchronization, and then transmits a message including protocol control information and protocol status information to the actuator. Then, the actuator performs the verification again. If it is found that they are still inconsistent with each other, it indicates that software or the hardware per se of the controller 3 has a problem or the controllers 1, 2 perform an incorrect protocol simultaneously, and an alarm or event is reported to the webmaster for manual processing.

The detector reports the network fault to trigger the controllers 1 to 3 for protecting SD to execute protocols respectively, where the controller 1 is the master controller, then
(1) In the message issued by the controller 1, the protocol control information is "Idle" and the protocol status information is "RR".
(2) In the message issued by the controller 2, the protocol control information is "Switch" and the protocol status information is "RR"; and
(3) In the message issued by the controller 3, the protocol control information is "Idle" and the protocol status information is "PSD".

There are three types of protocol control information and protocol status information, namely, Idle/RR, Switch/RR and Idle/PSD. The controller 1 belongs to the Idle/RR type, the controller 2 belongs to the Switch/RR type, and the controller 3 belongs to the Idle/PSD type. This protocol verification fails to distinguish which controller shall prevail, thus the actuator transmits a multicasting message merely including protocol reset commands to the controllers.

After the three controllers all perform the protocol reset, it is required to re-query network fault information of the detector, and a message including protocol control information and status information is transmitted to the actuator again after the protocol is triggered.

It will be understood by those ordinary skilled in the art that all or a portion of steps of the embodiments described above may be implemented with a computer program flow. The computer program may be stored in a computer-readable storage medium, and is executed on a corresponding hardware platform (such as a system, a device, an apparatus, a means, and the like). The computer program, when being executed, includes one or a combination of the steps of a method embodiment.

Alternatively, all or part of the steps of the embodiments described above may also be implemented by an integrated circuit. These steps may be achieved by separately making them into individual integrated circuit modules or achieved by making a plurality of modules or steps into a single integrated circuit module.

The apparatus/functional modules/functional units in the embodiments described above may be implemented by a general-purpose computing apparatus, and may be concentrated on a single computing apparatus or may be distributed over a network composed of a plurality of computing apparatuses.

The apparatus/functional modules/functional units in the embodiments described above may be implemented in a form of a software functional module and may be stored in a computer-readable storage medium when being sold or used as a standalone product. The above-mentioned computer-readable storage medium may be a read-only memory, a magnetic disk, or an optical disk, and the like.

### INDUSTRIAL APPLICABILITY

According to the embodiments of the present invention, each controller normally runs the protocol, the controller per se does not belong to a master controller or a standby controller fixedly, and does not maintain a master-standby status per se. The master-standby relationship of controllers is dynamically maintained by an actuator of each protection group, so that a 1:N (N>=1) hot standby scenario of the controllers in the distributed protection is supported. Moreover, in the case where a protocol is in a steady state, the actuator can perform the synchronization of the protection protocols without performing a protocol synchronization among the master controller and the standby controllers.

## Claims

1. A method for hot standby of controllers in distributed protection, comprising:
through an actuator, receiving a message transmitted from each of the controllers, determining messages caused by a same protocol triggering according to a serial number of each message, maintaining a master-standby relationship of each of the controllers through the messages caused by the same protocol triggering, and executing the message transmitted from a master controller, and
in a protocol steady state, through the actuator, performing a master-standby switching if it is determined that a switching condition is met.

2. The method according to claim 1, wherein the message transmitted from each of the controllers comprises protocol control information, protocol status information and the serial number.

3. The method according to claim 2, wherein the step of maintaining a master-standby relationship of each of the controllers through the messages caused by the same protocol triggering comprises: having the controller, from which the message caused by the same protocol triggering is first received upon a first protocol triggering, as the master controller, and having other controllers as standby controllers; upon each protocol triggering, recording the controller from which the message is first received, and adding a message issue number in master-standby relationship information by 1.

4. The method according to claim 1, further comprising: setting a first expiration time T1; and when the message transmitted from a standby controller is actually first received by the actuator, executing, through the actuator, a protect switching operation in accordance with the message transmitted from the standby controller if no message transmitted from the master controller is received within the first expiration time T1.

5. The method according to claim 1, wherein the protocol steady state is as follows: a second expiration time T2 is set, after the messages transmitted from the controllers are received by the actuator, if no message transmitted from any controller is received within the second expiration time T2, it is determined that a protection protocol of a protection group is in a steady state; and
the switching condition is as follows: in the protocol steady state, in current master-standby relationship information, a message issue number of a standby controller is greater than or equal to a first threshold N, and the message issue number of the master controller is less than N.

6. The method according to claim 5, wherein the step of performing a master-standby switching comprises: through the actuator, comparing the message issue numbers of the standby controllers in the master-standby relationship information, switching the standby controller with largest message issue number as the master controller and switching original master controller as the standby controller, and resetting the message issue number of each of the controllers in the master-standby relationship information as 0.

7. The method according to claim 2, further comprising: through the actuator, verifying the protocol control information and the protocol status information of each of the controllers, and performing a protocol synchronization or protocol reset if there exists any inconsistency among the protocol control information and the protocol status information of each of the controllers.

8. The method according to claim 7, wherein the step of through the actuator, verifying the protocol control information and the protocol status information of each of the controllers, and performing a protocol synchronization or protocol reset if there exists any inconsistency among the protocol control information and the protocol status information of each of the controllers comprises: in the protocol steady state, through the actuator, classifying the controllers, the messages transmitted from which have same protocol control information and same protocol status information, into one type according to the protocol control information and the protocol status information in the messages transmitted from each of the controllers upon each protocol triggering, in the case that a total number of controllers of a certain type is maximum, through the actuator, transmitting a multicasting message including a protocol synchronization command and the protocol control information and protocol status information of such type of controllers to each controller, and each controller verifies own protocol control information and protocol status information after receiving the multicasting message; if there exists any inconsistency between the multicasting message and the controller's own protocol control information and protocol status information, performing a synchronization of the protection protocol through the actuator, and the synchronization is omitted if the multicasting message is consistent with the controller's own protocol control information and protocol status information; in the case that there is no type of controllers a total number of which is maximum, transmitting a multicasting message including merely a protocol reset command to each controller, so that each controller re-queries a network fault of the detector to execute the protocol after resetting the protection protocol.

9. An apparatus for hot standby of controllers in distributed protection, comprising:
a receiving module, arranged to receive a message transmitted from each of the controllers;
a determination module, arranged to determine messages caused by a same protocol triggering according to a serial number of each message;
a maintenance module, arranged to maintain a master-standby relationship of each of the controllers through the messages caused by the same protocol triggering;
a message execution module, arranged to execute the message transmitted from a master controller; and
a master-standby switching module, arranged to, in a protocol steady state, perform a master-standby switching if it is determined that a switching condition is met.

10. The apparatus according to claim 9, wherein the message transmitted from each of the controllers comprises protocol control information, protocol status information and the serial number.

11. The apparatus according to claim 10, wherein the maintenance module is arranged to: have the controller, from which the message caused by a same protocol triggering is first received upon a first protocol triggering, as the master controller, and have other controllers as standby controllers; upon each protocol triggering, record the controller from which the message is first received, and add a message issue number in master-standby relationship information by 1.

12. The apparatus according to claim 10, further comprising: a verification module, arranged to verify the protocol control information and the protocol status information of each of the controllers, and perform protocol synchronization or protocol reset if there exists any inconsistency among the protocol control information and the protocol status information of each of the controllers.

13. An actuator, comprising the apparatus for hot standby of controllers in distributed protection according to any one of claims 9 to 15.

14. A system for hot standby of controllers in distributed protection, comprising an actuator, a detector and a plurality of controllers, wherein
the detector is arranged to, after performing a fault detection, inform each of the controllers of a network fault through transmitting a multicasting message;
each of the controllers is arranged to individually execute a protection protocol after receiving the multicasting message, and respectively transmit a message to the actuator after executing the protection protocol, wherein the message transmitted to the actuator comprises protocol control information, protocol status information and a serial number; and
the actuator is arranged to receive the messages transmitted from each of the controllers; determine messages caused by a same protocol triggering according to the serial number of each message; maintain a master-standby relationship of each of the controllers through the messages caused by the same protocol triggering; and execute the message transmitted from a master controller; and in a protocol steady state, perform a master-standby switching if it is determined that a switching condition is met.

15. A computer-readable storage medium storing a computer-executable instruction, wherein the computer-executable instruction is arranged to execute the method according to any one of claims 1 to 8.
